(19) Europäisches Patentamt
European Patent Office
Office européen des brevets

(11) EP 3 568 628 B1

(12) **EUROPÄISCHE PATENTSCHRIFT**

(45) Veröffentlichungstag und Bekanntmachung des Hinweises auf die Patenterteilung:
**27.07.2022 Patentblatt 2022/30**

(21) Anmeldenummer: **18700631.7**

(22) Anmeldetag: **05.01.2018**

(51) Internationale Patentklassifikation (IPC):
**F17C 3/04** (2006.01)  **F17C 3/08** (2006.01)
**F17C 13/00** (2006.01)  **F17C 13/02** (2006.01)

(52) Gemeinsame Patentklassifikation (CPC):
**F17C 3/04; F17C 3/08; F17C 13/001; F17C 13/005; F17C 13/025; F17C 13/026;** F17C 2201/0109; F17C 2203/0308; F17C 2203/032; F17C 2203/0391; F17C 2203/0629; F17C 2221/033; F17C 2223/0161; F17C 2223/033; F17C 2250/03; (Forts.)

(86) Internationale Anmeldenummer:
**PCT/AT2018/060001**

(87) Internationale Veröffentlichungsnummer:
**WO 2018/129571 (19.07.2018 Gazette 2018/29)**

(54) **VORRICHTUNG UND VERFAHREN ZUR BESTIMMUNG DER WÄRMEISOLATIONSQUALITÄT VON DOPPELWANDIGEN VAKUUMISOLIERTEN BEHÄLTERN**

DEVICE AND METHOD FOR DETERMINING THE THERMAL INSULATION QUALITY OF TWIN-WALLED, VACUUM-INSULATED CONTAINERS

DISPOSITIF ET PROCÉDÉ DE DÉTERMINATION DE LA QUALITÉ D'ISOLATION THERMIQUE DE RÉCIPIENTS À DOUBLE PAROI ISOLÉS SOUS VIDE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **16.01.2017 AT 500282017**

(43) Veröffentlichungstag der Anmeldung:
**20.11.2019 Patentblatt 2019/47**

(73) Patentinhaber: **Cryoshelter GmbH**
**8143 Dobl-Zwaring (AT)**

(72) Erfinder: **REBERNIK, Matthias**
**8143 Dobl-Zwaring (AT)**

(74) Vertreter: **Margotti, Herwig Franz**
**Schwarz & Partner**
**Patentanwälte**
**Wipplingerstrasse 30**
**1010 Wien (AT)**

(56) Entgegenhaltungen:
**EP-A1- 3 012 510         WO-A1-2016/128696**
**DE-A1-102005 014 479     JP-A- H04 169 777**

(52) Gemeinsame Patentklassifikation (CPC): (Forts.)
F17C 2250/032; F17C 2250/0408; F17C 2250/043;
F17C 2250/0439; F17C 2250/0491;
F17C 2250/0626; F17C 2250/0631;
F17C 2250/0694; F17C 2270/01; F17C 2270/0168

**Beschreibung**

Die Erfindung betrifft eine Vorrichtung und ein Verfahren zur Bestimmung der Wärmeisolationsqualität von doppelwandigen vakuumisolierten Behältern.

Die Isolationsgüte doppelwandiger, vakuumisolierter Behälter hängt einerseits maßgeblich von der Vakuumqualität ab. Der Vakuumdruck nimmt über die Zeit - im Verlauf von Monaten oder Jahren - durch Ausgasen der involvierten Materialien und Oberflächen und/oder durch Diffusion durch die abdichtenden Wandungen hindurch allmählich zu. Infolge mechanischer Defekte, wie z.B. Haarrisse oder schwere Beschädigungen, kann der Vakuumdruck auch sehr schnell zunehmen. Steigt der Vakuumdruck über einen gewissen Schwellwert an, so führt dies zu einem erhöhten Wärmeeintrag über die Vakuumisolation und damit zur Beeinträchtigung der Isolationsgüte. Durch neuerliches Leerpumpen des Vakuumraums kann die Isolationsgüte wiederhergestellt werden. Das Leerpumpen ist jedoch aufwändig und zeitintensiv.

Andererseits hängt die Isolationsgüte vom ungestörten Aufbau der Superisolation ab. Als einfachstes Beispiel dient ein einzelnes Wärmeisolationsschild, dessen primäre Aufgabe es ist, Wärmestrahlung zu unterbinden, weshalb dafür auch der Begriff "Wärmestrahlungsschild" verwendet wird. In der nachfolgenden Beschreibung wird anstelle der Begriffe "Wärmeisolationsschild" bzw. "Wärmestrahlungsschild" gelegentlich der abgekürzte Begriff "Schild" verwendet; alle drei Bezeichnungen haben, wie hierin verwendet, die gleiche Bedeutung. Das Wärmestrahlungsschild ist zwischen Innenwand (Innentank) und Außenwand (Außenbehälter) so befestigt, dass es abgesehen von der Schildaufhängung keinen direkten Kontakt zwischen Wärmestrahlungsschild und Außenbehälter bzw. zwischen Wärmestrahlungsschild und Innentank gibt. Ein solcher direkter Kontakt würde die Isolationsgüte - je nach Berührungsfläche - als Folge der dann zusätzlichen direkten Wärmeleitung zwischen Wärmestrahlungsschild und der jeweiligen Wand beeinträchtigen. Gleiches gilt für Mehrlagenisolationen (Multi-Layer-Insulation - MLI), die aus einer Anzahl von Aluminiumfolien und dazwischen gelegten Fasermatten (oder ähnliche Materialien mit geringem Wärmeleitwert) aufgebaut sind. Die effektive Isolationsgüte hängt u.a. wesentlich von der Lagendichte ab, d.h. mit welcher Kraft die einzelnen Lagen gegeneinander gedrückt werden. Diese Kraft beeinflusst die Wärmeleitung zwischen den Lagen und damit den Gesamtwärmestrom in Richtung der im Vergleich zur Außenwand kalten Innenwand. Wird diese Kraft - auch nur lokal - durch eine Verformung z.B. des Außenbehälters erhöht, steigt der Wärmeeintrag an.

Im Folgenden wird das der Erfindung zugrundeliegende Problem am Beispiel von Kryobehältern erläutert. Kryobehälter dienen der Aufbewahrung und dem Transport von tiefkalt verflüssigten Gasen bei Temperaturen von -120°C und kälter. Kryobehälter sind aus einem Außenbehälter und einem Innentank aufgebaut. Der Innentank ist durch eine Innentankaufhängung im Außenbehälter befestigt. Rohrleitungen zur Befüllung und Entnahme des verflüssigten Gases führen vom Innentank durch den Vakuumisolationsraum hindurch zum Außenbehälter. Außenbehälter und Innentank berühren einander nicht. Der Zwischenraum (Vakuumkammer) zwischen Außenbehälter und Innentank wird evakuiert. In der Vakuumkammer wird zusätzlich eine Wärmeisolation installiert, die ein oder mehrere Wärmestrahlungsschilde umfasst, die den durch Wärmestrahlung hervorgerufenen Wärmeeintrag reduzieren. Die optimale Isolationswirkung der Wärmestrahlungsschilde wird erreicht, wenn der Vakuumdruck kleiner $10^{-4}$ mbar beträgt, da ab diesem Druck die Wärmeübertragung durch die verbleibenden freien Moleküle (Restgas) vernachlässigbar gering ist. Steigt der Druck über diesen Wert, nimmt die Wärmeübertragung durch das Restgas zu, bis hin zur Ausbildung von freier Konvektion und dem damit einhergehenden erheblichen Wärmeeintrag, der die Speicherverluste von Kryobehältern bis zu deren Unbrauchbarkeit erhöhen kann.

Zur Messung von Vakuumdrücken im Bereich von Größenordnungen um $10^{-4}$ mbar bedarf es sensibler und teurer Sensoren und Auswerteeinheiten wie z.B. Pirani-Vakuummeter, die bis zu Minimaldrücken von $10^{-4}$ mbar einsetzbar sind, oder Ionisations-Vakuummeter, die zur Druckbestimmung im Hoch- und Ultrahochvakuumbereich, also etwa von $10^{-3}$ bis $10^{-12}$ mbar, verwendet werden. Das Prinzip von Ionisations-Vakuummeter basiert auf einer indirekten Druckmessung mittels elektrischer Größen, die zu den Restgaspartikeln mit der Teilchenzahldichte proportional sind. Dazu muss das Restgas ionisiert werden, wofür es unterschiedliche Umsetzungsmöglichkeiten gibt: Kaltkathoden-Ionisationsvakuummeter und Glühkathoden-Ionisationsvakuummeter.

Diese Messverfahren sind jedoch teuer und insbesondere nicht für den Einsatz in mobilen Anwendungen, wie zum Beispiel Flüssiggastanks, insbesondere Flüssigerdgas-Kraftstofftanks (Liquid Natural Gas [LNG] Kraftstoffanks), geeignet.

Die gegenständliche Erfindung nutzt den Temperaturverlauf (mehrere Temperatur) an ausgewählten Messpunkten des doppelwandigen Behälters und/oder im doppelwandigen Behälter (z.B. Messpunkte an Wärmeisolationsschichten einer Mehrlagenisolation, an Wärmestrahlungsschilden, an der Innenwand und/oder an der Außenwand) als Messgröße zur Detektion einer Veränderung der Wärmeströme über die Vakuumisolation von doppelwandigen vakuumisolierten Behältern. Die Veränderung des Wärmestroms (i.d.R. eine Erhöhung) kann Folge von:

- einem zusätzlichen und/oder erhöhtem physischen Kontakt (durch erhöhte Kontaktpressung) zwischen einem der Behälter und einem Wärmestrahlungsschild bzw. einer oder mehreren Schichten einer Mehrlagen-Isolation;

- einer Veränderung des Vakuumdrucks; und/oder
- einer Veränderung von Wärmestrahlungseigenschaften der wirkenden Oberflächen, z.B. durch Abnützung (über die Lebensdauer)

sein.

In der JP 2006-078190 A ist ein System beschrieben, bei dem in einer zwischen einer Außenwand und einer Innenwand gebildeten Vakuumkammer ein Temperatursensor angeordnet ist, der keine der beiden Wände berührt. Der Temperatursensor kann in eine Mehrlagen-Wärmeisolationsfolie eingewickelt sein. Dieses System wird so verwendet, dass zunächst die Temperaturen der Außenwand und der Innenwand bei intaktem Vakuum der Vakuumkammer gemessen werden oder als fix angenommen werden können, z.B. Zimmertemperatur an der Außenwand und -196°C (= Siedetemperatur von Stickstoff) an der Innenwand, die einen Stickstoffbehälter bildet, und gleichzeitig mit dem Temperatursensor die Temperatur in der Vakuumkammer gemessen wird, die als Referenztemperatur festgelegt wird. Im laufenden Betrieb erfolgen weitere Temperaturmessungen mit dem Temperatursensor, wobei die Außen- und Innenwandtemperatur konstant bleiben müssen, wobei ein Vakuumverlust (Druckanstieg) im Vakuumbehälter durch Vergleich der Referenztemperatur mit der aktuell vom Temperatursensor gemessenen Temperatur ermittelt wird. Aus der Beschreibung dieses Dokuments geht hervor, dass eine Erhöhung der Temperatur im Vakuumbehälter als Druckanstieg interpretiert wird. Optional ist bei dem bekannten System zusätzlich eine Vorrichtung zum Detektieren des Auftretens einer Abnormalität in der Wärmebelastung vorgesehen, wobei es sich bei dieser Detektionsvorrichtung nicht um den Temperatursensor handelt. Stattdessen kann die Detektionsvorrichtung eine Temperaturkonstanthaltevorrichtung sein, an der detektiert wird, ob sie zur Temperaturkonstanthaltung des von der Innenwand gebildeten Innenraums plötzlich mehr Energie aufbringen muss als normal. Als ein alternatives Ausführungsbeispiel einer solchen Detektionsvorrichtung ist die Erfassung der Menge verdampften Stickstoffes aus einem im Innenraum angeordneten Stickstoffbehälter mit flüssigem Stickstoff erwähnt. Eine Erhöhung der Verdampfungsmenge wird als Abnormalität interpretiert. Mit dieser Detektionsvorrichtung soll das Auftreten von Problemen mit einem Supraleiterkabelkühlsystem oder einer im Stickstoffbehälter angeordneten Einrichtung überwacht werden. Von außen verursachte Abnormalitäten werden offensichtlich nicht in Betracht gezogen. Dieses Überwachungssystem ist somit nur für eingeschränkte Anwendungen geeignet, bei denen davon ausgegangen werden kann, dass sich die Außentemperatur nicht ändert und keine von außen verursachte Störungen auftreten. Die offenbarten eingeschränkten Anwendungen umfassen einen Behälter mit flüssigem Stickstoff, in dem Laborgeräte untergebracht sind, oder Supraleiterkabelkühlsysteme, die stationär in Räumen vorgesehen sind. Das bekannte Überwachungssystem ist jedoch für Anwendungen, bei denen die Außentemperatur variieren kann oder - allgemeiner ausgedrückt - die Umgebungsparameter veränderlich sind, ungeeignet. Solche veränderlichen Umgebungsparameter herrschen insbesondere bei Fahrzeugen vor, die wechselnden Temperaturen, veränderlichen Wetterbedingungen und dynamischen mechanischen Belastungen ausgesetzt sind. Insbesondere ist das bekannte System für die Überwachung von Flüssiggastanks an Fahrzeugen völlig ungeeignet.

Die EP 3 012 510 A1 offenbart einen Flüssiggasspeichertank mit einer Innenschale und einer Außenschale, wobei ein Vakuumraum zwischen der Innenschale und der Außenschale gebildet wird.

Die DE 10 2005 014479 A1 offenbart einen Behälter für tiefkalte Flüssigkeiten, bestehend im Wesentlichen aus einem Außenbehälter und einem Innenbehälter, zwischen denen ein eine Superisolation enthaltender evakuierter Zwischenraum besteht.

Die WO 2016/128696 A1 offenbart ein Verfahren zum Fördern von Flüssigkeiten in einem geschlossenen und wärmeisolierten Tank, der ein Flüssiggas enthält.

Die JP H04 169777 A offenbart einen wärmeisolierenden Behälter.

Die vorliegende Erfindung überwindet die Einschränkungen und Nachteile des Standes der Technik durch Bereitstellen einer Vorrichtung und eines Verfahrens zur Bestimmung der Wärmeisolationsqualität eines doppelwandigen vakuumisolierten Behälters mit den Merkmalen des Anspruchs 1 bzw. des Anspruchs 13.

Weitere Vorteile und Merkmale der Erfindung gehen aus den Unteransprüchen und der nachfolgenden Beschreibung von Ausführungsbeispielen hervor.

Die erfindungsgemäße Vorrichtung dient zur Bestimmung der Wärmeisolationsqualität eines doppelwandigen vakuumisolierten Behälters, wobei der Behälter eine der Umgebung zugewandte Außenwand und eine einen Innentank definierende Innenwand aufweist, wobei zwischen der Außenwand und der Innenwand des doppelwandigen Behälters eine Vakuumkammer ausgebildet ist, in der zumindest eine Wärmeisolierungseinrichtung angeordnet ist. Es sind am bzw. im Behälter zumindest drei voneinander beabstandete Temperatursensoren angeordnet, die wiederkehrend momentane Temperaturen des Behälters erfassen, wobei die Positionen der Temperatursensoren ausgewählt sind aus Positionen an der Außenwand, der Innenwand und/oder der Wärmeisolierungseinrichtung. Eine mit einer Recheneinheit und einer Speichereinheit ausgerüstete Auswerteeinheit empfängt die von den Temperatursensoren erfassten Temperaturen. In der Auswerteeinheit ist ein, vorzugsweise schichtenweises, Wärmeübertragungsmodell auf der Basis der Konstruktions- und Materialeigenschaften des Behälters und der sich daraus ergebenden Wärmestrahlung gespeichert. Die Auswerteeinheit ist dazu ausgebildet, aus dem Wärmeübertragungsmodell zumindest punktweise einen Temperaturverlauf zu berechnen, der zumindest zwei der von den Temperatursensoren erfassten Temperaturen enthält, und aus dem Temperaturverlauf einen Temperatur-Sollwert für die Position zumindest eines weiteren der Temperatursensoren zu errechnen und mit dem tatsächlich von diesem Temperatursensor erfassten Temperatur-Istwert zu vergleichen und aus der Abweichung zwischen dem Temperatur-Sollwert und dem Temperatur-Istwert eine Veränderung der Wärmeisolationsqualität des Behälters zu detektieren, wenn die Abweichung jenseits eines Grenzwerts liegt. Vorzugsweise berücksichtigt das Wärmeübertragungsmodell des Behälters auch die sich aus den Konstruktions- und Materialeigenschaften des Behälters ergebende Wärmeleitung.

Das Wärmeübertragungsmodell kann anhand der in der nachfolgenden Beschreibung angegebenen Gleichungen errechnet werden. Das Design des Behälters, d.h. die Materialien des Behälters, ihre Eigenschaften, die Verbindungsstellen und die Geometrie des Behälters sind vorbekannt und ermöglichen die Vorab-Erstellung des Wärmeübertragungsmodells, das nach seiner Erstellung im Speicher der Auswerteeinheit gespeichert wird. Alternativ dazu, aber aufgrund des hohen Rechenaufwands nicht bevorzugt, könnten auch die Design-Daten des Behälters in der Auswerteeinheit gespeichert werden und die Auswerteeinheit aus diesen Design-Daten selbst das Wärmeübertragungsmodell errechnen. Das Wärmeübertragungsmodell ist vorzugsweise ein Schichtenmodell.

Wärmestrahlung ist proportional zur vierten Potenz der Temperatur ($T^4$), wogegen die Festkörperwärmeleitung und die Restgaswärmeleitung im Wesentlichen proportional zur ersten Potenz der Temperatur ($T^1$) sind.

Entsprechend deutlich unterscheiden sich die Temperaturverläufe / die Temperaturen bei unterschiedlichen Zusammensetzungen der Anteile der einzelnen Wärmeübertragungsarten, und dieser Effekt wird zur erfindungsgemäßen Bestimmung der Wärmeisolationsqualität eines doppelwandigen vakuumisolierten Behälters ausgenutzt.

Die Erfindung wird nun anhand von Ausführungsbeispielen unter Bezugnahme auf die Zeichnungen näher erläutert.

Fig. 1 zeigt einen Kryobehälter mit einer erfindungsgemäßen Vorrichtung zur Bestimmung der Wärmeisolationsqualität dieses doppelwandigen vakuumisolierten Behälters schematisch im Längsschnitt.

Die Figuren 2 bis 5 zeigen Temperatur-Weg Diagramme, die den Einfluss der an der Außenwand und der Innenwand des Kryobehälters herrschenden Temperaturen auf die Temperatur eines Wärmeisolationsschildes bei intaktem Vakuum illustrieren.

Fig. 6 zeigt ein Temperatur-Weg Diagramm mit einer konstanten Außentemperatur an der Außenwand und einer konstanten Innentanktemperatur an der Innenwand des Kryobehälters, mit Vakuumdruck-Degradation in der Vakuumkammer.

Fig. 7 zeigt eine weitere Ausführungsform eines Kryobehälters mit einer erfindungsgemäßen Vorrichtung zur Bestimmung der Wärmeisolationsqualität dieses doppelwandigen vakuumisolierten Behälters schematisch im Querschnitt.

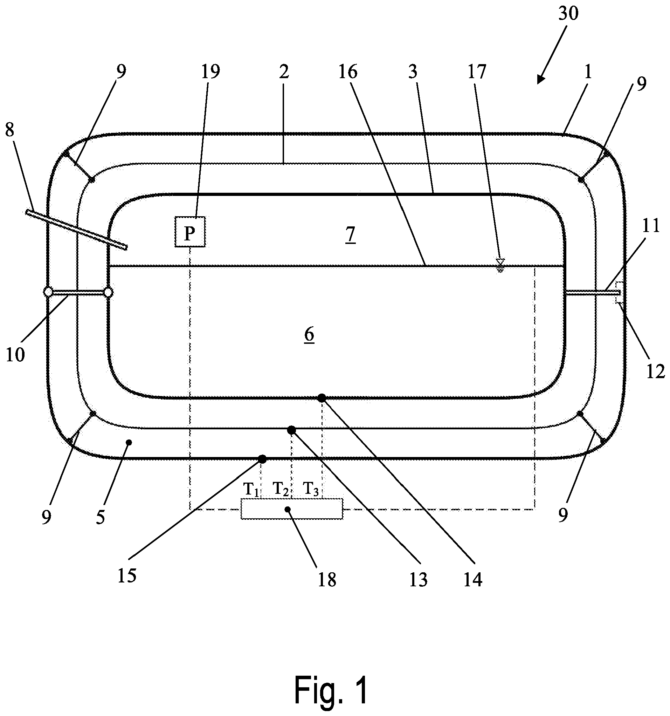

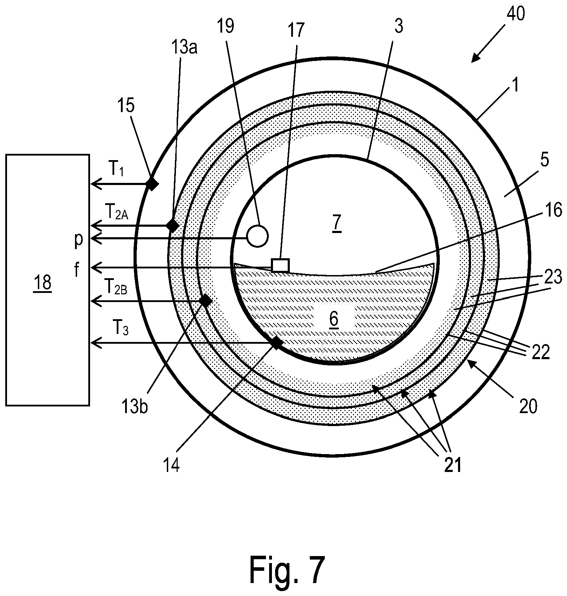

Fig. 1 zeigt einen Kryobehälter 30 gemäß der Erfindung schematisch im Längsschnitt. Der Kryobehälter 30 ist als doppelwandiger Behälter ausgeführt, mit einer Außenwand 1, die einen Außenbehälter definiert und einem im Außenbehälter angeordneten, durch eine Innenwand 3 definierten Innentank. Der Zwischenraum zwischen der Außenwand und der Innenwand bildet eine Vakuumkammer 5, die vor der Inbetriebnahme des Kryobehälters 30 evakuiert wird. Der Innentank ist zur Aufnahme von verflüssigtem Gas 6 ausgebildet und weist dafür eine vom Innenraum 7 des Innentanks durch die Vakuumkammer 5 und die Außenwand 1 hindurchführende Rohrleitung 8 auf. Der Füllstand 16 des verflüssigten Gases 6 kann mit einem Füllstandsmesser 17 gemessen werden, dessen Signal einer unten näher erklärten Auswerteeinheit 18 zugeführt wird. Der Innentank ist im Außenbehälter mittels einer Aufhängung befestigt, die einen die Außenwand 1 und die Innenwand 3 starr verbindenden ersten Stab 10, vorzugsweise aus schlecht wärmeleitendem Material, und einen dem ersten Stab 10 gegenüberliegend angeordneten zweiten Stab 11 umfasst, der fix an der Innenwand 3 montiert ist und axial verschiebbar in einem Gleitlager 12 gelagert ist, das an der Außenwand 1 befestigt ist. Die Außenwand 1 und die Innenwand 3 des Kryobehälters 30 haben durch diese Aufhängung keinen direkten Kontakt miteinander. Die Innenwand 3 ist von zumindest einem in der Vakuumkammer 5 angeordneten Wärmeisolationsschild 2 umgeben, wobei das zumindest eine Wärmeisolationsschild 2 mittels Befestigungsstäben 9 aus schlecht wärmeleitendem Material an der Außenwand 1 aufgehängt ist. Als Alternative zu den Befestigungsstäben 9 kann das zumindest eine Wärmeisolationsschild 2 auch adiabat an den Stäben 10, 11 befestigt werden. Ein Temperatursensor 13 ist an dem Wärmeisolationsschild 2 angebracht, der wiederkehrend die Temperatur $T_2$ des Wärmeisolationsschildes 2 misst. Zumindest zwei weitere Temperatursensoren 15, 14 messen wiederkehrend die Temperatur $T_1$ der Außenwand 1 (mittels Temperatursensor 15) und/oder die Temperatur $T_3$ an der Innenwand 3 (mittels Temperatursensor 14) und/oder die Temperatur an zumindest einem weiteren Wärmeisolationsschild (in dieser Figur nicht dargestellt). Alternativ zu einem oder mehreren Wärmeisolationsschilden 2 kann eine Mehrlagenisolation (MLI) vorgesehen sein (siehe Fig. 7), die mehrere Verbundlagen aus einer Metallfolie, z.B. Aluminiumfolie, und einem wärmeisolierenden Material, z.B. Fasermaterial oder Schaumstoff, umfasst. Die Verbundlagen können, vorzugsweise konzentrisch, um die Innenwand herum angeordnet sein, oder als Wickel mit mehreren Windungen ausgebildet sein. Bei einer solchen Ausführungsform ist an zumindest einer Verbundlage der Mehrlagenisolation ein Temperatursensor angeordnet. Die Temperatursignale der Temperatursensoren 13, 14, 15 sind einer Auswerteeinheit 18 zugeführt, die - falls vorhanden - auch die Signale des Füllstandsmessers 17 empfängt. Ergänzend oder alternativ zu einem Temperatursensor 14 an der Innenwand 3 kann im Innenraum 7 ein Drucksensor 19 vorgesehen sein, dessen Drucksignale der Auswerteeinheit 18 zugeführt werden. Aus den Druckwerten im Innenraum 7 kann nämlich die Temperatur des Flüssiggases 6 im Innenraum errechnet werden, wie unten ausführlich erklärt wird, und davon die Temperatur der Innenwand 3 abgeleitet werden. Anstelle des Temperatursensors 15 an der Außenwand 1 kann die Temperatur ein Umgebungsthermometer (z.B. Fahrzeug-Außenthermometer) näherungsweise als Temperatur der Außenwand 1 angenommen werden. Solche Umgebungsthermometer sind an Fahrzeugen mittlerweile Standard. Es ist jedoch zu beachten, dass dabei die Genauigkeit der erfinderischen Methode reduziert wird. Die Übermittlung der Signale der Temperatursensoren 13, 14, 15, des Füllstandsmessers 17 und des Drucksensors 19 kann drahtlos oder drahtgebunden an die Auswerteeinheit 18 erfolgen. Im Falle von Drahtleitung können die Drähte z.B. entlang des Stabs 10, der Befestigungsstäbe 9 oder des Rohrs 8 erfolgen, oder eine dedizierte Kabelführung im Kryobehälter 30 ausgebildet sein.

Die Temperatur der Wärmeisolationsschilde bzw. der Mehrlagenisolierung hängt ab von:

- den Emissionsgraden der Oberflächen: nämlich der Innenseite der Außenwand, dem jeweiligen Schild (Außenseite und Innenseite) und der Außenseite der Innenwand;
- der Anzahl und Größe der Durchbrüche oder sonstiger Öffnungen (Störungen) in den Schilden;
- der Festkörper-Wärmeleitung über konstruktionsbedingte Wärmebrücken zu/von den Schilden zu benachbarten Bauteilen wie z.B. der Innenwand, der Außenwand, Rohrleitungen, etc.;
- der Festkörper-Wärmeleitung über (unvorhergesehene, z.B. durch mechanische Einwirkung entstandene) Wärmebrücken zu/von den Schilden zu benachbarten Bauteilen;
- der Restgaswärmeleitung, die vom Vakuumdruck abhängt.

Die Auswerteeinheit 18 der erfindungsgemäßen Vorrichtung 30 ist dazu ausgebildet, aus zumindest zwei von den zumindest drei voneinander beabstandeten Temperatursensoren 13, 14, 15 gelieferten Temperatursignalen einen Temperaturverlauf auf der Basis von Wärmeübertragung durch Wärmestrahlung zu berechnen, der die zumindest zwei Temperaturen enthält, und diesen Temperaturverlauf mit zumindest der dritten ermittelten Temperaturen in Bezug zu setzen und dadurch auf den Vakuumdruck in der Vakuumkammer 5 zu schließen bzw. gegebenenfalls Beschädigungen der Außenwand 1 und/oder der Innenwand 3 zu erkennen. Wärmestrahlung ist proportional zur vierten Potenz der Temperatur ($T^4$), wogegen die Festkörperwärmeleitung und die Restgaswärmeleitung proportional zur ersten Potenz der Temperatur ($T^1$) sind. Entsprechend deutlich unterscheiden sich die Temperaturverläufe auf Basis der Wärmestrahlung von Temperaturverläufen auf Basis von Festkörperwärmeleitung und/oder Restgaswärmeleitung. Auf Wärmestrahlung beruhende Temperaturverläufe haben einen gekrümmten Verlauf, wogegen auf der Festkörperwärmeleitung und der Restgaswärmeleitung beruhende Temperaturverläufe im Wesentlichen einer Geraden folgen.

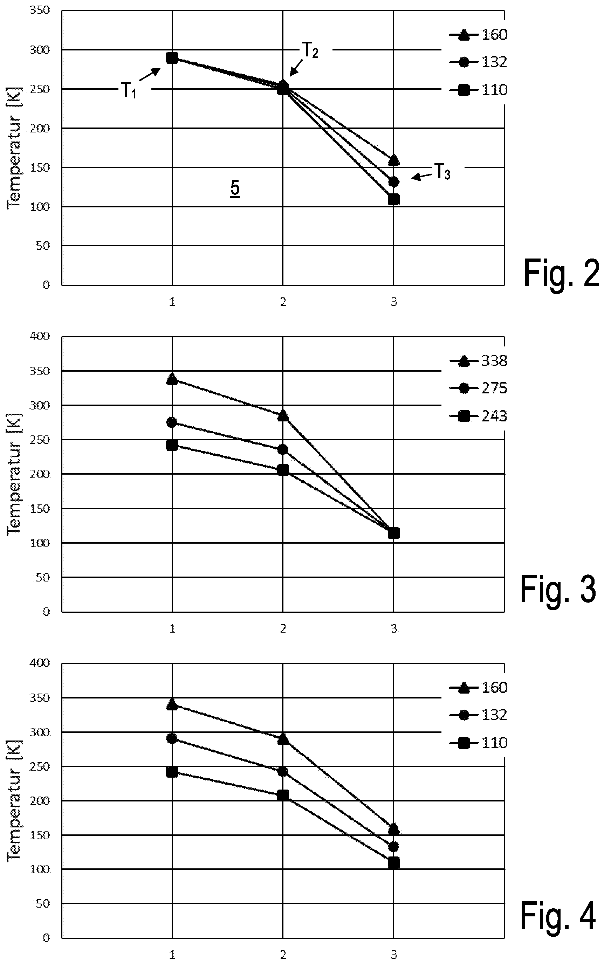

Nachfolgend wird anhand der an der Außenwand 1, einem Wärmeisolationsschild 2 und der Innenwand 3 des Kryobehälters 30 wiederkehrend gemessenen Temperaturen erläutert, wie der Wärmeeintrag in den von der Innenwand 3 definierten Innentank erfindungsgemäß ermittelt und so auf den Vakuumdruck in der Vakuumkammer 5 geschlossen wird bzw. gegebenenfalls Beschädigungen der Außenwand 1 und/oder der Innenwand 3 erkannt werden. Zum besseren Verständnis wird auf die in Temperatur/Weg Diagrammen der Figuren 2 bis 5 dargestellten Temperaturverläufe Bezug genommen, die jeweils die gemessenen Temperaturen an der Außenwand 1, dem Wärmeisolationsschild 2 und der Innenwand 3 zeigen. Es ist zu erwähnen, dass die nachfolgend erklärten erfindungsgemäßen Mess- und Auswerteprinzipien auch dann Gültigkeit haben, wenn eine der Temperaturen an einem weiteren Wärmeisolationsschild anstatt an der Außenwand 1 oder der Innenwand 3 gemessen wird. Es ist auch möglich und im Hinblick auf die Genauigkeit der Auswertung empfohlen, mehr als drei Temperaturen zur Messung zu verwenden.

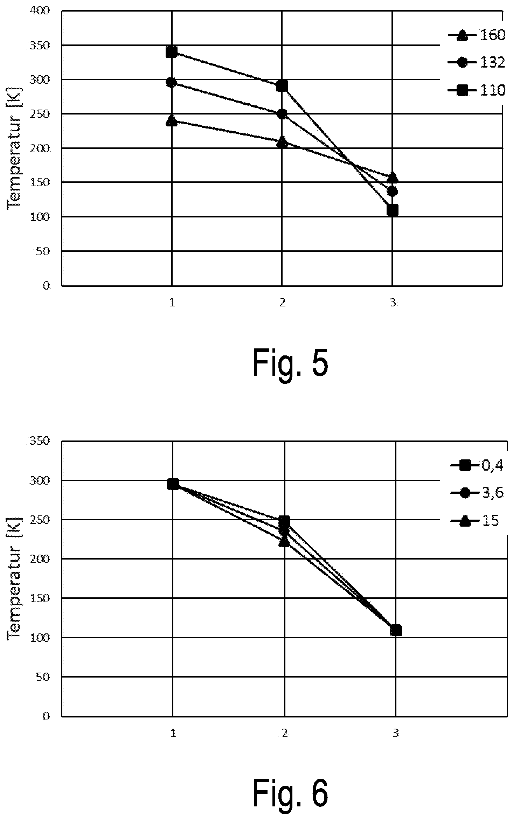

Die Diagramme der Figuren 2 bis 5 zeigen den Einfluss der an der Außenwand 1 und der Innenwand 3 herrschenden Temperaturen auf die Temperatur des Wärmeisolationsschildes 2 bei intaktem Vakuum in der Vakuumkammer 5. Fig. 2 zeigt Temperaturverläufe bei konstanter Außentemperatur und variierten Innentanktemperaturen. Fig. 3 zeigt Temperaturverläufe bei konstanter Innentanktemperatur und variierten Außentemperaturen. Fig. 4 zeigt Temperaturverläufe bei einer Kombination der höchsten Außentemperatur mit der höchsten Innentanktemperatur und vice versa. Fig. 5 zeigt Temperaturverläufe bei einer Kombination der höchsten Außentemperatur mit der niedrigsten Innentanktemperatur und vice versa.

Die Außentemperatur in der automotiven Anwendung des doppelwandigen, vakuumisolierten Kryobehälters bzw. Kryotanks wird in der Regel zwischen -40°C (243K) und +65°C (338K) erwartet (ausgelegt); die hohe Temperatur wird bei direkter Sonneneinstrahlung auf den Kryobehälter erreicht. Die Innentanktemperatur wird vom Speicherdruck bestimmt, weil kryogene Flüssigkeiten als siedende Flüssigkeiten gespeichert werden und die Siedetemperatur abhängig vom Druck ist, siehe nachstehende Tabelle 1.

Tabelle 1: Siedetemperatur von Methan abhängig vom Druck

| Flüssiges Methan | | |
|---|---|---|
| Druck | Siedetemperatur | |
| [bar] | [K] | [°C] |
| 0,0 | 112 | -162 |
| 8,0 | 147 | -126 |
| 16,0 | 162 | -111 |

Da der Speicherdruck in Kryobehälter (Kryotank) je nach Betriebsart - offener Behälter, geschlossener Behälter - stark variieren kann, ist eine entsprechende Änderung der Innentanktemperatur zu erwarten. Im realen Betrieb kann die tatsächliche Innentanktemperatur je nach Behältergröße einige Kelvin von der theoretischen Siedetemperatur infolge Abweichungen vom idealen thermodynamischen Gleichgewichtszustand abweichen. Dadurch wird die Auswertbarkeit allerdings nicht wesentlich in der Aussagekraft reduziert.

Fig. 6 zeigt ein Temperatur-Weg Diagramm mit einer konstanten Außentemperatur an der Außenwand 1 und einer konstanten Innentanktemperatur an der Innenwand 3, mit Vakuumdruck-Degradation in der Vakuumkammer, repräsentiert durch einen Faktor, der proportional zur Wärmeübertragung durch Restgaswärmeleitung (RGL) ist. Ein RGL-Faktor von 0,4 (Messpunkte als Quadrate □ dargestellt) repräsentiert ein intaktes Vakuum in der Vakuumkammer 5, bei dem die Wärmeübertragung durch Restgaswärmeleitung vernachlässigbar gering ist. Ein RGL-Faktor von 3,6 (Messpunkte als Kreise o dargestellt) repräsentiert ein beeinträchtigtes Vakuum in der Vakuumkammer 5, und ein RGL-Faktor von 15 (Messpunkte als Dreiecke ▲ dargestellt) repräsentiert ein erheblich beeinträchtigtes Vakuum.

Fig. 6 zeigt den Einfluss von zunehmender Wärmeübertragung (zusätzlich zur bestehenden Wärmeübertragung durch Strahlung) durch Restgaswärmeleitung (auch wenn sich bei steigendem Anteil das Übertragungsregime bis hin zur Konvektion ändert). Die Schildtemperatur sinkt (!) bei degradiertem Vakuum von 248 K bei einem RGL-Faktor von 0,4 auf 220 K bei einem RGL-Faktor von 15. Bei konstanten Umgebungsbedingungen lässt sich also an der Schildtemperatur mit guter Signalqualität eine Änderung des Vakuumdrucks ablesen. Entgegen der intuitiven Erwartung und der Ansichten der Fachleute im veröffentlichten Stand der Technik steigt jedoch die Schildtemperatur bei verschlechterter Vakuumqualität nicht, sondern sinkt (!) und zwar deutlich. Der Grund liegt in der unterschiedlichen Proportionalität der unterschiedlichen Wärmeübertragungsarten zur Temperatur(-differenz). Die Schildtemperatur stellt sich bei einer Temperatur ein, wo der Wärmestrom $Q_{12}$ von der Außenwand 1 zum Schild 2 gleich dem Wärmestrom $Q_{23}$ vom Schild 2 zur Innenwand 3 ist, dies fordert die Kontinuität. Reine Wärmestrahlung folgt der Differenz der vierten Potenzen der Temperatur, während Restgaswärmeleitung bzw. Wärmeleitung der Differenz der Temperatur (ersten Potenz, linear) folgt. Bei deutlich dominierender Wärmestrahlung folgt, dass die Temperaturdifferenz zwischen Außenwand 1 und Schild 2 deutlich geringer ist als zwischen Schild 2 und Innentank 3.

Kommt nun eine lineare Komponente hinzu (Restgaswärmeleitung, Wärmeleitung) sinkt die Schildtemperatur im Extremfall hin zum arithmetischen Mittel der Außentemperatur und der Innentanktemperatur.

Ein Anstieg der Schildtemperatur ist nur möglich, sofern ein zusätzlicher Wärmestrom von der Außenwand zum Schild hinzukommt, also z.B. wenn durch eine Delle in der Außenwand ein solcher physischer Kontakt hinzukommt. Die Kontinuität fordert, dass die zusätzliche Wärme von außen hin zum Innentank übertragen wird, wobei keine Änderung der Zusammensetzung aus Strahlung und ggf. anderer Wärmeströme (wie z.B. vorhandene Schildaufhängungen o.Ä.) auftritt. Daher muss die Temperaturdifferenz steigen, also die Schildtemperatur steigen. (Die Innentanktemperatur ist ja durch den druckabhängigen Siedepunkt des gespeicherten Gases bestimmt).

Aufgrund der weiten Bereiche, innerhalb derer sich die Temperaturen der Außenwand und des Innentanks bewegen können, ist es nicht möglich, auf Basis der Schildtemperatur allein eine Verschlechterung des Vakuums oder der Isolationsqualität zu detektieren. Eine Interpretation der gemessenen Temperaturen wird erst mit Hilfe einer die verantwortlichen Wärmeübertragungsarten berücksichtigenden Berechnung oder Näherung möglich.

Nach den oben beschriebenen Erkenntnissen und der Kenntnis der Zusammenhänge ist es nun möglich, unterschiedliche Schadensfälle zu detektieren bzw. zusätzliche Plausibilitätsprüfungen durchzuführen. Die Auswertung der gemessenen Temperaturen ermöglicht auch einen Rückschluss auf den Vakuumdruck. Aus Messungen bei unterschiedlichen Vakuumdrücken ist die Schildtemperatur in Abhängigkeit vom Vakuumdruck bekannt. Gleichzeitig kann die Schildtemperatur bei unterschiedlichen Vakuumdrücken mit Hilfe der theoretischen Beschreibung der physikalischen und thermodynamischen Zusammenhänge berechnet werden. Aus Vergleich der Messungen und Berechnungen können die erforderlichen Parameter ggf. nochmals mit besserer Präzision ermittelt werden, als dies möglicherweise nur basierend auf Literaturwerten möglich ist. Somit kann - die positive Bewertung aller Plausibilitätsprüfungen vorausgesetzt - auf Basis der Schildtemperatur auf den Vakuumdruck rückgeschlossen werden. Die obigen Erläuterungen werden nachfolgend durch physikalische Formeln ausgedrückt:

Außenwand 1 $\rightarrow$ $Q_{12}$ $\rightarrow$ Schild 2 $\rightarrow$ $Q_{23}$ $\rightarrow$ Innenwand 3

$$Q_{12} = Q_{Strahlung12} + Q_{Wärmeleitung12} + Q_{Restgaswärmeleitung12}$$

$$Q_{23} = Q_{Strahlung23} + Q_{Wärmeleitung23} + Q_{Restgaswärmeleitung23}$$

$$Q_{12} = Q_{23}$$

$$Q_{Strahlung12} = f(T_1^4, T_2^4, \varepsilon_1, \varepsilon_2, A_1, A_2, \sigma)$$

$$Q_{Wärmeleitung12} = f(T_1^1, T_2^1, \lambda_{12}, L_{12}, A_{12}) \qquad \ldots \qquad (Fourier\text{-}Gesetz)$$

$$Q_{Restgaswärmeleitung} \ proportional \ zu \ f(p_{RGL}, T, \ldots)$$

(obige Gleichungen gelten analog für $Q_{23} = Q_{Strahlung23} + Q_{Wärmeleitung23} + Q_{Restgaswärmeleitung23}$)
wobei:

| | |
|---|---|
| Q | Wärmestrom ($Q_{12}$ von der Außenwand zum Schild, $Q_{23}$ vom Schild zur Innenwand) |
| T | Temperatur ($T_1$ an der Außenwand 1, $T_2$ am Schild, $T_3$ an der Innenwand) |
| $\varepsilon$ | Emissionsgrad ($\varepsilon_1$ an der Außenwand 1, $\varepsilon_2$ am Schild 2) |
| $\sigma$ | Boltzmann-Konstante |
| A | Fläche ($A_1$ der Außenwand, $A_2$ des Schilds 2) |
| $\lambda_{12}$ | Wärmeleitfähigkeit der Aufhängung |
| $L_{12}$ | 1 / wärmeleitungsrelevante Länge der Aufhängung |
| $p_{RGL}$ | Vakuumdruck |

Dieses Gleichungssystem kann je nach Vorliegen der Temperaturen oder des Vakuumdrucks gelöst werden. Es ist darauf hinzuweisen, dass bei Vakuumdrücken von ca. $10^{-4}$ mbar und kleiner der Anteil der durch Restgaswärmeleitung übertragenen Wärme vernachlässigbar gering ist, d.h. dass das thermische Isolationssystem seine Soll-Performance erreicht hat. Es heißt auch, dass sich die Schildtemperatur $T_2$ bei Vakuumdrücken gleich oder kleiner diesem Schwellwert nicht mehr ändert. Sobald jedoch der Vakuumdruck soweit steigt, dass ein durch Restgaswärmeleitung technisch relevanter Wärmestrom entsteht, ist dies an der sinkenden (!) Schildtemperatur erkennbar. Die Schildtemperatur ist im relevanten Bereich proportional dem Vakuumdruck. Daher kann in diesem Bereich über die Schildtemperatur auch auf den Vakuumdruck rückgeschlossen werden.

Die Auswertung ist bei Verwendung mehrerer Schilde bzw. Mehrlagenisolation (MLI) bzw. Kombinationen aus Schild und Mehrlagenisolation gleichermaßen möglich. Hierbei reichen drei gemessene Temperaturen i.d.R. aus, wobei die Außenbehältertemperatur nicht unbedingt hierfür erforderlich ist. Es reicht z.B., die Temperatur von zwei Schilden und des Innentanks zu messen, da sich aus der Zusammensetzung der Wärmeströme und der Kontinuitätsgleichung gemeinsam ausreichend Rückschlüsse auf die Einhaltung sinnvoller Grenzwerte ziehen lassen. Solange Wärmestrahlung als Übertragungsmechanismus dominiert - wie dies im Falle einer ordnungsgemäß funktionierenden Vakuumisolation der Fall ist - werden die gemessenen Temperaturen auf einer charakteristischen Kurve zu finden sein (auch wenn es im Vakuum keinen kontinuierlichen Temperaturverlauf gibt, sondern eben diskrete Punkte auf von Vakuum und somit "temperaturfreien" umgebenen Strukturen). Aufgrund dieses Temperaturverlaufs im Vakuum bestehend aus diskreten Temperaturpunkten ist es eine zulässige Näherung, die charakteristische Temperaturkurve rechnerisch aus Geradenstücken zusammenzusetzen, die jeweils die Temperaturen benachbarter diskreter Temperaturpunkte verbinden, wobei sich aus dem Winkel $\alpha$ zwischen jeweils aneinandergrenzenden Geradenstücken ermitteln lässt, ob die vorherrschende Wärmeübertragung die Wärmestrahlung mit einem Temperaturverlauf zur vierten Potenz ist und damit der Vakuumdruck ausreichend niedrig ist, oder ob lineare Wärmeleitungsmechanismen eine unerwünscht hohe Rolle spielen, die auf Defekte des Kryobehälters hindeutet. Aus der Geschwindigkeit der Veränderung des Winkels $\alpha$ ergibt sich proportional die Geschwindigkeit der Änderung der Temperatur an diesem diskreten Punkt, woraus auf den Grund der Veränderung geschlossen werden kann.

Die Auswertung mit Hilfe des obigen Gleichungssystems kann ebenfalls fix installierte Wärmeleitungspfade berücksichtigen, d.h. z.B. die Wärmeleitung, die über das Aufhängungssystem der Schilde in die Schilde fließt. Somit kann Wärmeleitung bzw. die "fertige Konstruktion" in die Soll-Bewertung mit einfließen. Gleichzeitig ergibt sich daraus wiederum umgekehrt die Möglichkeit, eine Abweichung festzustellen. Steigt z.B. die Schildtemperatur, so kann dies nur durch einen zusätzlichen (unvorhergesehenen) Wärmestrom von der Außenwand zum Schild verursacht werden. Ein Anstieg des Vakuumdrucks würde dagegen die Wärmeströme auf beiden Seiten (Innenseite und Außenseite) gleichzeitig beeinflussen.

Somit ist diese Vorrichtung auch dazu geeignet, optional in Kombination mit weiter unten angeführten Plausibilitätschecks, mit Hilfe weiterer Parameter kritische mechanische Beschädigungen des Kryotanks oder mechanischer Strukturen des Isolationssystems zu detektieren.

Anstelle der Messung der Innentanktemperatur kann eine Messung und Auswertung des Innentankdrucks vorgenommen werden: Wie beschrieben ändert sich abhängig vom Speicherdruck im Innentank die Siedetemperatur von darin gespeicherten Gasen (Stoffen). Bei Kryotanks treten nun einerseits abhängig von der Größe der Tanks (von wenigen Litern bis tausenden Kubikmetern allgemein) Abweichungen vom thermodynamischen Gleichgewichtszustand auf, d.h. dass die Flüssigphase "unterkühlt" sein kann, d.h. die auf Basis des gemessenen Drucks bestimmte Temperatur einige Kelvin über der tatsächlichen Temperatur liegt.

Beim Betankungsvorgang wird durch eine Pumpe Druck erzeugt, somit sind in diesem transienten Zustand Druck und Temperatur voneinander entkoppelt. Durch z.B. Integration des Füllstandsignals in die Auswertung der Wandtemperaturen und Schildtemperaturen kann ein solcher Vorgang erkannt und richtig interpretiert werden.

Während der Entnahme (ggf. auch Befüllung) kann - durch unabsichtlichen oder konstruktiv ausgeführten Kontakt zwischen Rohrleitungen und Isolation/Schilden - die Schildtemperatur von der im Ruhezustand zu erwartenden Temperatur deutlich abweichen. Durch Erkennung des entsprechenden Zustandes können die Wandtemperaturen und Schildtemperaturen weiterhin richtig interpretiert werden.

Durch die Geschwindigkeit der Änderung der gemessenen Temperaturen können Schadensfälle von intakter Funktionsfähigkeit unterschieden werden. Ein Vakuumbruch z.B. führt zu einer sehr schnellen Temperaturänderung im Vergleich zur Änderung der Temperatur bei langsamem Druckanstieg im Behälter infolge z.B. abgestelltem Fahrzeug bei sich ändernden Umgebungs/Witterungsbedingungen. Ein Vergleich der Änderungsraten der jeweiligen Bedingungen dient daher ebenso der korrekten Interpretation der Wandtemperaturen und der Schildtemperatur.

Fig. 7 zeigt eine zweite Ausführungsform eines Kryobehälter 40 gemäß der Erfindung schematisch im Querschnitt. Wie die in Fig. 1 dargestellte Ausführungsform ist auch die Ausführungsform des Kryobehälter 40 als doppelwandiger Behälter konstruiert, mit einer Außenwand 1, die einen Außenbehälter definiert und einem im Außenbehälter angeordneten, durch eine Innenwand 3 definierten Innentank. Der Zwischenraum zwischen der Außenwand und der Innenwand bildet eine Vakuumkammer 5, die vor der Inbetriebnahme des Kryobehälters 40 evakuiert wird. Der Innentank ist zur Aufnahme von verflüssigtem Gas 6 ausgebildet. Der Füllstand 16 des verflüssigten Gases 6 kann mit einem Füllstandsmesser 17 gemessen werden, dessen Signal der Auswerteeinheit 18 zugeführt wird. Die Aufhängung des Innentanks am Außenbehälter ist aus Gründen der Übersichtlichkeit weggelassen, sie entspricht aber jener der ersten Ausführungsform. Die Innenwand 3 ist von einer Wärmeisolationseinrichtung in Form einer Mehrlagenisolation (MLI) 20 umgeben, die mehrere Verbundlagen 21 aus einer Metallfolie 22, z.B. Aluminiumfolie, und einem wärmeisolierenden Material 23, z.B. Fasermaterial oder Schaumstoff, umfasst. Die Verbundlagen 21 sind konzentrisch, um die Innenwand 3 herum angeordnet. Alternativ dazu können die Verbundlagen 21 als Wickel mit mehreren Windungen ausgebildet sein. Die Aufhängung der Mehrlagenisolation 20 kann ausgeführt sein wie die Aufhängung der Schilde bei der ersten Ausführungsform.

Bei dieser Ausführungsform sind an mehreren Verbundlagen 21 Temperatursensoren 13a, 13b (Zahl der Temperatursensoren ist nicht auf zwei beschränkt) angeordnet, die wiederkehrend die Temperaturen $T_{2A}$, $T_{2B}$ an voneinander beabstandeten Punkten der Mehrlagenisolation 20 messen. Zwei weitere Temperatursensoren 15, 14 messen wiederkehrend die Temperatur $T_1$ der Außenwand 1 (mittels Temperatursensor 15) und/oder die Temperatur $T_3$ an der Innenwand 3 (mittels Temperatursensor 14). Die Temperatursignale der Temperatursensoren 13a, 13b, 14, 15 sind der Auswerteeinheit 18 zugeführt, die auch die Füllstandssignale f des Füllstandsmessers 17 empfängt. Ergänzend oder alternativ zu dem Temperatursensor 14 an der Innenwand 3 kann im Innenraum 7 ein Drucksensor 19 vorgesehen sein, dessen Drucksignale der Auswerteeinheit 18 zugeführt werden. Anstelle des Temperatursensors 15 an der Außenwand 1 kann die Temperatur eines Umgebungsthermometers (z.B. Fahrzeug-Außenthermometer) näherungsweise als Temperatur der Außenwand 1 angenommen werden. Die Auswertung der Temperatursignale, Drucksignale und Signale des Füllstandsmessers erfolgt, wie oben beschrieben.

**Patentansprüche**

1. Vorrichtung zur Bestimmung der Wärmeisolationsqualität eines doppelwandigen vakuumisolierten Behälters (30, 40), wobei der Behälter eine der Umgebung zugewandte Außenwand (1) und eine einen Innentank definierende Innenwand (3) aufweist, wobei zwischen der Außenwand und der Innenwand des doppelwandigen Behälters eine Vakuumkammer (5) ausgebildet ist, in der zumindest eine Wärmeisolierungseinrichtung (2, 20) angeordnet ist, wobei die Vorrichtung zumindest drei voneinander beabstandete Temperatursensoren (13, 13a, 13b, 14, 15) aufweist, die wiederkehrend momentane Temperaturen des Behälters (30, 40) erfassen, wobei die Positionen der Temperatursensoren (13, 13a, 13b, 14, 15) ausgewählt sind aus Positionen an der Außenwand (1), der Innenwand (3) und/oder der Wärmeisolierungseinrichtung (2, 20), wobei die Vorrichtung eine Auswerteeinheit (18) umfasst, die die von den Temperatursensoren (13, 13a, 13b, 14, 15) erfassten Temperaturen ($T_1$, $T_2$, $T_{2A}$, $T_{2B}$, $T_3$) empfängt, wobei in der Auswerteeinheit (18) ein, vorzugsweise schichtenweises, Wärmeübertragungsmodell auf der Basis der Konstruktions- und Materialeigenschaften des Behälters und der sich daraus ergebenden Wärmestrahlung gespeichert ist, **dadurch gekennzeichnet, dass** die Auswerteeinheit (18) dazu ausgebildet ist, aus dem Wärmeübertragungsmodell zumindest punktweise einen Temperaturverlauf zu berechnen, der zumindest zwei der von den Temperatursensoren (13, 13a, 13b, 14, 15) erfassten Temperaturen ($T_1$, $T_2$, $T_{2A}$, $T_{2B}$, $T_3$) enthält, und aus dem Temperaturverlauf einen Temperatur-Sollwert für die Position zumindest eines weiteren der Temperatursensoren zu errechnen und mit dem tatsächlich von diesem Temperatursensor erfassten Temperatur-Istwert zu vergleichen und aus der Abweichung zwischen dem Temperatur-Sollwert und dem Temperatur-Istwert eine Veränderung der Wärmeisolationsqualität des Behälters zu detektieren, wenn die Abweichung jenseits eines Grenzwerts liegt.

2. Vorrichtung nach Anspruch 1, **dadurch gekennzeichnet, dass** das Wärmeübertragungsmodell des Behälters auch die sich aus den Konstruktions- und Materialeigenschaften des Behälters ergebende Wärmeleitung berücksichtigt.

3. Vorrichtung nach Anspruch 1 oder 2, **dadurch gekennzeichnet, dass** die Wärmeisolierungseinrichtung zumindest ein Wärmeisolationsschild (2) und/oder eine Mehrlagenisolierung (20) mit Verbundlagen (21) aus einer Metallfolie 22 und einem wärmeisolierenden Material (23) umfasst, wobei die Verbundlagen (21) optional als ein Wickel mit mehreren Windungen ausgebildet sind.

4. Vorrichtung nach einem der vorhergehenden Ansprüche, **dadurch gekennzeichnet, dass** die Auswerteeinheit (18) die detektierte Veränderung der Wärmeisolationsqualität des Behälters als Druckanstieg in der Vakuumkammer (5) klassifiziert, wenn die Abweichung des Temperatur-Istwerts vom Temperatur-Sollwert um den Grenzwert oder mehr unter dem Temperatur-Sollwert liegt.

5. Vorrichtung nach einem der vorhergehenden Ansprüche, **dadurch gekennzeichnet, dass** die Auswerteeinheit (18) die detektierte Veränderung der Wärmeisolationsqualität des Behälters als Beschädigung der Außenwand (1) klassifiziert, wenn die Abweichung des Temperatur-Istwerts vom Temperatur-Sollwert um den Grenzwert oder mehr über dem Temperatur-Sollwert liegt.

6. Vorrichtung nach einem der vorhergehenden Ansprüche, **dadurch gekennzeichnet, dass** die Auswerteeinheit (18) dazu ausgebildet ist, die Temperatur der Außenwand (1) aus Umgebungsbedingungen zu ermitteln, wozu die Auswerteeinheit vorzugsweise mit einem Temperatursensor einer externen Vorrichtung, insbesondere dem Außentemperatursensor eines Fahrzeugs, an dem die Vorrichtung angebracht ist, verbunden ist und aus dessen Temperatursignalen die Temperatur der Außenwand ableitet.

7. Vorrichtung nach einem der vorhergehenden Ansprüche, **dadurch gekennzeichnet, dass** die Auswerteeinheit (18) dazu ausgebildet ist, aus der Differenz zwischen dem Temperatur-Sollwert und dem Temperatur-Istwert den Vakuumdruck in der Vakuumkammer (5) zu ermitteln, auf der Basis vorangegangener Temperaturmessungen bei unterschiedlichen bekannten Vakuumdrücken in der Vakuumkammer (5).

8. Vorrichtung nach einem der vorhergehenden Ansprüche, **dadurch gekennzeichnet, dass** ein Drucksensor (19) im Innentank vorgesehen ist, und die Auswerteeinheit (18) dazu ausgebildet ist, die Drucksignale des Drucksensors zu empfangen und aus den Drucksignalen die Temperatur im Innentank anhand der Druckabhängigkeit der Siedetemperatur zu ermitteln, bei der Flüssiggas im Innentank gespeichert ist.

9. Vorrichtung nach Anspruch 8, **dadurch gekennzeichnet, dass** die Auswerteeinheit (18) dazu ausgebildet ist, die Veränderung des vom Drucksensor (19) gemessenen Drucks im Innentank als transienten Betankungsvorgang zu klassifizieren, wenn die Veränderungsrate einen Grenzwert übersteigt.

**10.** Vorrichtung nach einem der vorhergehenden Ansprüche, **dadurch gekennzeichnet, dass** im Innentank ein Füllstandssensor (17) angeordnet ist, dessen Füllstandssignale (f) der Auswerteeinheit (18) zugeführt sind, wobei die Auswerteeinheit (18) dazu ausgebildet ist, die Veränderung des Füllstands (16) des gespeicherten Flüssiggases (7) als transienten Betankungsvorgang zu klassifizieren, wenn die Veränderungsrate einen Grenzwert übersteigt.

**11.** Vorrichtung nach einem der vorhergehenden Ansprüche, **dadurch gekennzeichnet, dass** die Auswerteeinheit (18) dazu ausgebildet ist, den Temperaturverlauf durch Aneinanderreihen von Geradenstücken anzunähern, welche Geradenstücke jeweils benachbarte, von den Temperatursensoren erfasste Temperatur-Istwerte verbinden, wobei die Auswerteeinheit (18) aus einem Winkel (a) an einem Verbindungspunkt zwischen zwei aneinandergrenzenden Geradenstücken die Abweichung des Temperatur-Istwerts an diesem Verbindungspunkt vom Temperatur-Sollwert ableitet.

**12.** Vorrichtung nach Anspruch 11, **dadurch gekennzeichnet, dass** die Auswerteeinheit (18) dazu ausgebildet ist, aus einer Veränderungsrate des Winkels a, die proportional zur Veränderungsrate des Temperatur-Istwerts an diesem Verbindungspunkt ist, die Ursache zu klassifizieren.

**13.** Verfahren zur Bestimmung der Wärmeisolationsqualität eines doppelwandigen vakuumisolierten Behälters (30, 40), wobei der Behälter eine der Umgebung zugewandte Außenwand (1) und eine einen Innentank definierende Innenwand (3) aufweist, wobei zwischen der Außenwand und der Innenwand des doppelwandigen Behälters eine Vakuumkammer (5) ausgebildet ist, in der zumindest eine Wärmeisolierungseinrichtung (2, 20) angeordnet ist, wobei am beziehungsweise im Behälter (30, 40) zumindest drei voneinander beabstandete Temperatursensoren (13, 13a, 13b, 14, 15) angeordnet sind, wobei wiederkehrend momentane Temperaturen ($T_1$, $T_2$, $T_{2A}$, $T_{2B}$, $T_3$) des Behälters (30, 40) erfasst werden, wobei die Positionen der Temperatursensoren (13, 13a, 13b, 14, 15) ausgewählt werden aus Positionen an der Außenwand (1), der Innenwand (3) und/oder der Wärmeisolierungseinrichtung (2, 20), wobei zumindest punktweise ein Temperaturverlauf unter Anwendung eines, vorzugsweise schichtenweisen, Wärmeübertragungsmodells auf der Basis der Konstruktions- und Materialeigenschaften des Behälters und der sich daraus ergebenden Wärmestrahlung berechnet wird, **dadurch gekennzeichnet, dass** der Temperaturverlauf zumindest zwei der von den Temperatursensoren (13, 13a, 13b, 14, 15) erfassten Temperaturen ($T_1$, $T_2$, $T_{2A}$, $T_{2B}$, $T_3$) enthält, und dass aus dem Temperaturverlauf ein Temperatur-Sollwert für die Position zumindest eines weiteren der Temperatursensoren errechnet und mit dem tatsächlich von diesem Temperatursensor erfassten Temperatur-Istwert verglichen wird und aus der Abweichung zwischen dem Temperatur-Sollwert und dem Temperatur-Istwert eine Veränderung der Wärmeisolationsqualität des Behälters detektiert wird, wenn die Abweichung jenseits eines Grenzwerts liegt.

**14.** Verfahren nach Anspruch 13, **dadurch gekennzeichnet, dass** das Wärmeübertragungsmodell des Behälters auch die sich aus den Konstruktions- und Materialeigenschaften des Behälters ergebende Wärmeleitung berücksichtigt.

**15.** Verfahren nach einem der Ansprüche 13 oder 14, **dadurch gekennzeichnet, dass** die detektierte Veränderung der Wärmeisolationsqualität des Behälters als Druckanstieg in der Vakuumkammer (5) klassifiziert wird, wenn die Abweichung des Temperatur-Istwerts vom Temperatur-Sollwert um den Grenzwert oder mehr unter dem Temperatur-Sollwert liegt.

**16.** Verfahren nach einem der Ansprüche 13 bis 15, **dadurch gekennzeichnet, dass** die detektierte Veränderung der Wärmeisolationsqualität des Behälters als Beschädigung der Außenwand (1) klassifiziert wird, wenn die Abweichung des Temperatur-Istwerts vom Temperatur-Sollwert um den Grenzwert oder mehr über dem Temperatur-Sollwert liegt.

**17.** Verfahren nach einem der Ansprüche 13 bis 16, **dadurch gekennzeichnet, dass** aus der Differenz zwischen dem Temperatur-Sollwert und dem Temperatur-Istwert der Vakuumdruck in der Vakuumkammer (5) ermittelt wird, auf der Basis vorangegangener Temperaturmessungen bei unterschiedlichen bekannten Vakuumdrücken in der Vakuumkammer (5).

**18.** Verfahren nach einem der Ansprüche 13 bis 17, **dadurch gekennzeichnet, dass** ein an der Innenwand (3) anordenbarer Drucksensor (19) im Innentank vorgesehen ist, und aus den Drucksignalen die Temperatur im Innentank anhand der Druckabhängigkeit der Siedetemperatur, bei der Flüssiggas im Innentank gespeichert ist, ermittelt wird.

**19.** Verfahren nach Anspruch 18, **dadurch gekennzeichnet, dass** die Veränderung des vom Drucksensor (19) gemessenen Drucks im Innentank als transienter Betankungsvorgang klassifiziert wird, wenn die Veränderungsrate einen Grenzwert übersteigt.

20. Verfahren nach einem der Ansprüche 13 bis 19, **dadurch gekennzeichnet, dass** im Innentank ein Füllstandssensor (17) angeordnet ist, wobei die Veränderung des Füllstands (16) des gespeicherten Flüssiggases (7) als transienter Betankungsvorgang klassifiziert wird, wenn die Veränderungsrate einen Grenzwert übersteigt.

21. Verfahren nach einem der Ansprüche 13 bis 20, **dadurch gekennzeichnet, dass** der Temperaturverlauf durch Aneinanderreihen von Geradenstücken angenähert wird, welche Geradenstücke jeweils benachbarte, von den Temperatursensoren erfasste Temperatur-Istwerte verbinden, wobei aus einem Winkel (a) an einem Verbindungspunkt zwischen zwei aneinandergrenzenden Geradenstücken die Abweichung des Temperatur-Istwerts an diesem Verbindungspunkt vom Temperatur-Sollwert abgeleitet wird.

22. Verfahren nach Anspruch 21, **dadurch gekennzeichnet, dass** aus einer Veränderungsrate des Winkels a, die proportional zur Veränderungsrate des Temperatur-Istwerts an diesem Verbindungspunkt ist, die Ursache klassifiziert wird.

## Claims

1. A device for determining the heat insulation quality of a dual-wall, vacuum-insulated container (30, 40), wherein the container has an external wall (1) facing the surrounding as well as an internal wall (3) defining an internal tank, wherein there is formed between the external wall and internal wall of the dual-wall container a vacuum chamber (5), in which there is arranged at least one heat insulation device (2, 20), wherein the device has at last three temperature sensors (13, 13a, 13b, 14, 15) spaced apart from another, which recurrently register the instantaneous temperatures of the container (30, 40), wherein the positions of the temperature sensors (13, 13a, 13b, 14, 15) are selected from positions at the external wall (1), the internal wall (3) and/or at the heat insulation device (2, 20), wherein the device comprises an evaluation unit (18), which receives the temperatures ($T_1$, $T_2$, $T_{2A}$, $T_{2B}$, $T_3$) registered by the temperature sensors (13, 13a, 13b, 14, 15), wherein in the evaluation unit (18) there is stored a preferably layer-wise heat transfer model on the basis of the construction and material characteristics of the container and the heat radiation resulting therefrom, **characterized in that** the evaluation unit (18) is configured to calculate from the heat transfer model at least in some points a temperature course, which contains at least two of the temperatures ($T_1$, $T_2$, $T_{2A}$, $T_{2B}$, $T_3$) registered by the temperature sensors (13, 13a, 13b, 14, 15), and to calculate from the temperature course a desired temperature value for the position of at least one further of the temperature sensors and to compare it with the actual temperature value actually registered by this temperature sensor and to detect from the deviation between the desired temperature value and the actual temperature value a change of the heat insulation quality of the container if the deviation exceeds a limit value.

2. A device according to claim 1, **characterized in that** the heat transfer model of the container will also take into account the heat conduction resulting from the construction and material characteristics.

3. A device according to claim 1 or 2, **characterized in that** the heat insulation device comprises at least one heat insulation panel (2) and/or a multi-layer insulation (20) having composite layers (21) made from a metal film 22 and a heat insulating material (23), wherein the composite layers (21) are optionally formed as coil having several convolutions.

4. A device according to any of the preceding claims, **characterized in that** the evaluation unit (18) classifies the detected change of the heat insulation quality of the container as a pressure increase within the vacuum chamber (5) if the deviation of the actual temperature value from the desired temperature value is about the limit value or rather less than the desired temperature value.

5. A device according to any of the preceding claims, **characterized in that** the evaluation unit (18) classifies the detected change of the heat insulation quality of the container as a damage to the external wall (1) if the deviation of the actual temperature value from the desired temperature value is about the limit value or rather more than the desired temperature value.

6. A device according to any of the preceding claims, **characterized in that** the evaluation unit (18) is configured to determine the temperature of the external wall (1) from environment conditions, for which reason the evaluation unit is connected preferably with a temperature sensor of an external device, in particular the external temperature sensor of a vehicle, at which the device is attached, and derives the temperature of the external wall from the temperature signals thereof.

7. A device according to any of the preceding claims, **characterized in that** the evaluation unit (18) is configured to determine from the difference between the desired temperature value and the actual temperature value the vacuum pressure within the vacuum chamber (5), on the basis of preceding temperature measurements at different known vacuum pressures within the vacuum chamber (5).

8. A device according to any of the preceding claims, **characterized in that** there is provided a pressure sensor (19) in the internal tank, and the evaluation unit (18) is configured to receive the pressure signals of the pressure sensor and to determine from the pressure signals the temperature within the internal tank by way of the pressure dependency of the boiling temperature, at which liquid gas is stored within the internal tank.

9. A device according to claim 8, **characterized in that** the evaluation unit (18) is configured to classify the change of the pressure within the internal tank measured by the pressure sensor (19) as a transient tank filling process if the rate of change exceeds a limit value.

10. A device according to any of the preceding claims, **characterized in that** there is arranged within the internal tank a filling level sensor (17), the filling level signals (f) of which are supplied to the evaluation unit (18), wherein the evaluation unit (18) is configured to classify the change of the filling level (16) of the stored liquid gas (7) as a transient tank filling process if the rate of change exceeds a limit value.

11. A device according to any of the preceding claims, **characterized in that** the evaluation unit (18) is configured to approximate the temperature course by arranging straight sections flush to one another, which straight sections respectively connect neighbouring actual temperature values registered by the temperature sensors, wherein the evaluation unit (18) derives from an angle ($\alpha$) at a connection point between two adjacent straight sections the derivation of the actual temperature value at this connection point from the desired temperature value.

12. A device according to claim 11, **characterized in that** the evaluation unit (18) is configured to classify from a rate of change of the angle $\alpha$, which is proportional to the rate of change of the actual temperature value at this connection point, the reason therefore.

13. A method for determining the heat insulation quality of a dual-wall, vacuum-insulated container (30, 40), wherein the container has an external wall (1) facing the surrounding as well as an internal wall (3) defining an internal tank, wherein there is formed between the external wall and the internal wall of the dual-wall container a vacuum chamber (5), in which there is arranged at least one heat insulation device (2, 20), wherein at least three temperature sensors (13, 13a, 13b, 14, 15) spaced apart from another are arranged on or, respectively in the container (30, 40), which recurrently register the instantaneous temperatures ($T_1$, $T_2$, $T_{2A}$, $T_{2B}$, $T_3$) of the container (30, 40), wherein the positions of the temperature sensors (13, 13a, 13b, 14, 15) are selected from positions at the external wall (1), the internal wall (3) and/or the heat insulation device (2, 20), wherein at least in some points there is calculated a temperature course using a preferably layer-wise heat transfer model on the basis of the construction and material characteristics of the container and the heat radiation resulting therefrom, **characterized in that** the temperature course contains at least two of the temperatures ($T_1$, $T_2$, $T_{2A}$, $T_{2B}$, $T_3$) registered by the temperature sensors (13, 13a, 13b, 14, 15), and that there is calculated from the temperature course a desired temperature value for the position of at least one further of the temperature sensors and compared with the actual temperature value actually registered by this temperature sensor and detected from the deviation between the desired temperature value and the actual temperature value a change of the heat insulation quality of the container if the deviation exceeds a limit value.

14. A method according to claim 13, **characterized in that** the heat transfer model of the container also takes into account the heat conduction resulting from the construction and material characteristics of the container.

15. A method according to any of claims 13 or 14, **characterized in that** the detected change of the heat insulation quality of the container is classified as a pressure increase within the vacuum chamber (5) if the deviation of the actual temperature value from the desired temperature value is about the limit value or rather less than the desired temperature value.

16. A method according to any of claims 13 to 15, **characterized in that** the detected change of the heat insulation quality of the container is classified as a damage of the external wall (1) if the deviation of the actual temperature value from the desired temperature value is about the limit value or rather more than the desired temperature value.

17. A method according to any of claims 13 to 16, **characterized in that** the vacuum pressure within the vacuum chamber (5) is determined from the difference between the desired temperature value and the actual temperature value, on the basis of preceding temperature measurements at different known vacuum pressures within the vacuum chamber (5).

18. A method according to any of claims 13 to 17, **characterized in that** a pressure sensor (19) arrangeable on the inner wall (3) in the internal tank is provided and that the temperature in the internal tank is determined from the pressure signals by way of the pressure dependency of the boiling temperature, at which liquid gas is stored within the internal tank.

19. A method according to claim 18, **characterized in that** the change of the pressure within the internal tank that is measured by the pressure sensor (19) is classified as a transient tank filling process if the rate of change exceeds a limit value.

20. A method according to any of claims 13 to 19, **characterized in that** there is arranged within the internal tank a filling level sensor (17), wherein the change of the filling level (16) of the stored liquid gas (7) is classified as a transient tank filling process if the rate of change exceeds a limit value.

21. A method according to any of the claims 13 to 20, **characterized in that** the temperature course is approximated by arranging straight sections flush to one another, which straight sections respectively connect neighbouring actual temperature values registered by the temperature sensors, wherein there is derived from an angle ($\alpha$) at a connection point between two adjacent straight sections the derivation of the actual temperature value at this connection point from the desired temperature value.

22. A method according to claim 21, **characterized in that** from a rate of change of the angle $\alpha$, which is proportional to the rate of change of the actual temperature value at this connection point, there is classified the reason thereof.

**Revendications**

1. Dispositif de détermination de la qualité d'isolation thermique d'un récipient à double paroi isolé sous vide (30, 40), avec lequel le récipient présente une paroi extérieure (1) orientée vers l'environnement et une paroi intérieure (3) définissant une cuve intérieure, entre la paroi extérieure et la paroi intérieure du récipient à double paroi étant formée une enceinte sous vide (5) dans laquelle au moins un système d'isolation thermique (2, 20) est disposé, lequel dispositif comporte au moins trois capteurs de température (13, 13a, 13b, 14, 15) espacés les uns des autres, les positions des capteurs de température (13, 13a, 13b, 14, 15) étant choisies parmi des positions sur la paroi extérieure (1), la paroi intérieure (3) et/ou le système d'isolation thermique (2, 20), lequel dispositif comprend une unité d'analyse (18) qui reçoit les températures ($T_1$, $T_2$, $T_{2A}$, $T_{2B}$, $T_3$) enregistrées par les capteurs de température (13, 13a, 13b, 14, 15), dans l'unité d'analyse (18) étant mémorisé un modèle de transfert thermique, de préférence par couche, basé sur les caractéristiques constructives et matérielles du récipient et le rayonnement thermique qui en découle, **caractérisé en ce que** l'unité d'analyse (18) est conçue pour calculer à partir du modèle de transfert thermique, au moins ponctuellement, une courbe de température qui comprend au moins deux des températures ($T_1$, $T_2$, $T_{2A}$, $T_{2B}$, $T_3$) enregistrées par les capteurs de température (13, 13a, 13b, 14, 15), et pour calculer à partir de la courbe de température une valeur nominale de température pour la position d'au moins un autre des capteurs de température et la comparer avec la valeur réelle de température effectivement enregistrée par ce capteur de température, et pour détecter à partir de l'écart entre la valeur nominale de température et la valeur réelle de température une variation de la qualité d'isolation thermique du récipient quand l'écart se trouve au-delà d'une valeur seuil.

2. Dispositif selon la revendication 1, **caractérisé en ce que** le modèle de transfert thermique du récipient tient aussi compte de la conduction thermique découlant des caractéristiques constructives et matérielles du récipient.

3. Dispositif selon la revendication 1 ou 2, **caractérisé en ce que** le système d'isolation thermique comprend au moins un bouclier d'isolation thermique (2) et/ou une isolation multicouche (20) avec des couches composites (21) composées d'une feuille métallique (22) et d'un matériau isolant thermiquement (23), les couches composites (21) étant éventuellement configurées comme un enroulement avec plusieurs spires.

**4.** Dispositif selon une des revendications précédentes, **caractérisé en ce que** l'unité d'analyse (18) classifie la variation détectée de la qualité d'isolation thermique du récipient comme une hausse de pression dans l'enceinte sous vide (5) quand l'écart entre la valeur réelle de température et la valeur nominale de température est inférieur à la valeur nominale de température de la valeur limite ou plus.

**5.** Dispositif selon une des revendications précédentes, **caractérisé en ce que** l'unité d'analyse (18) classifie la variation détectée de la qualité d'isolation thermique du récipient comme un endommagement de la paroi extérieure (1) quand l'écart entre la valeur réelle de température et la valeur nominale de température est supérieur à la valeur nominale de température de la valeur limite ou plus.

**6.** Dispositif selon une des revendications précédentes, **caractérisé en ce que** l'unité d'analyse (18) est conçue pour déterminer la température de la paroi extérieure (1) à partir de conditions environnantes, l'unité d'analyse (18) étant de préférence reliée avec un capteur de température d'un dispositif externe, en particulier le capteur de température extérieure d'un véhicule sur lequel le dispositif est monté, et déduisant de ses signaux de température la température de la paroi extérieure.

**7.** Dispositif selon une des revendications précédentes, **caractérisé en ce que** l'unité d'analyse (18) est conçue pour déterminer à partir de la différence entre la valeur nominale de température et la valeur réelle de température la dépression dans l'enceinte sous vide (5), sur la base de mesures de température précédentes à différentes dépressions connues dans l'enceinte sous vide (5).

**8.** Dispositif selon une des revendications précédentes, **caractérisé en ce que** l'unité d'analyse (18) est conçue pour recevoir les signaux de pression du capteur de pression et pour déterminer à partir des signaux de pression la température dans la cuve intérieure, à l'aide de la dépendance vis-à-vis de la pression de la température d'ébullition à laquelle le gaz liquéfié est emmagasiné dans la cuve intérieure.

**9.** Dispositif selon la revendication 8, **caractérisé en ce que** l'unité d'analyse (18) est conçue pour classifier la variation de la pression mesurée par le capteur de pression (19) dans la cuve intérieure comme une opération de remplissage temporaire de la cuve quand le taux de variation dépasse une valeur limite.

**10.** Dispositif selon une des revendications précédentes, **caractérisé en ce que** dans la cuve intérieure est agencé un capteur de niveau (17) dont les signaux de niveau (f) sont transmis à l'unité d'analyse (18), l'unité d'analyse (18) étant conçue pour classifier la variation du niveau (16) du gaz liquéfié emmagasiné (7) comme une opération de remplissage temporaire de la cuve quand le taux de variation dépasse une valeur limite.

**11.** Dispositif selon une des revendications précédentes, **caractérisé en ce que** l'unité d'analyse (18) est conçue pour approcher la courbe de température par juxtaposition de segments de droite, lesquels segments de droite relient des valeurs de température voisines entre elles enregistrées par les capteurs de température, l'unité d'analyse (18) déduisant à partir d'un angle ($\alpha$) au niveau d'un point de connexion entre deux segments de droite voisins entre eux l'écart de la valeur réelle de température au niveau de ce point de connexion par rapport à la valeur nominale de température.

**12.** Dispositif selon la revendication 11, **caractérisé en ce que** l'unité d'analyse (18) est conçue pour classifier la cause à partir d'un taux de variation de l'angle $\alpha$ qui est proportionnel au taux de variation de la valeur réelle de température au niveau de ce point de connexion.

**13.** Procédé de détermination de la qualité d'isolation thermique d'un récipient à double paroi isolé sous vide (30, 40), selon lequel le récipient présente une paroi extérieure (1) orientée vers l'environnement et une paroi intérieure (3) définissant une cuve intérieure, entre la paroi extérieure et la paroi intérieure du récipient à double paroi étant formée une enceinte sous vide (5) dans laquelle au moins un système d'isolation thermique (2, 20) est disposé, selon lequel sur ou dans le dispositif (30, 40) sont disposés au moins trois capteurs de température (13, 13a, 13b, 14, 15) espacés les uns des autres par le biais desquels des températures instantanées récurrentes ($T_1$, $T_2$, $T_{2A}$, $T_{2B}$, $T_3$) du récipient (30, 40) sont enregistrées, les positions des capteurs de température (13, 13a, 13b, 14, 15) étant choisies parmi des positions sur la paroi extérieure (1), la paroi intérieure (3) et/ou le système d'isolation thermique (2, 20), une courbe de température étant calculée au moins ponctuellement en appliquant un modèle de transfert thermique, de préférence par couche, basé sur les caractéristiques constructives et matérielles du récipient et le rayonnement thermique qui en découle, **caractérisé en ce que** la courbe de température comprend au moins deux des températures ($T_1$, $T_2$, $T_{2A}$, $T_{2B}$, $T_3$) enregistrées par les capteurs de température (13, 13a, 13b, 14, 15) et qu'à partir de la courbe de température est calculée une valeur nominale de température pour la position d'au moins un autre des capteurs de température et comparée avec la valeur réelle de température effectivement enregistrée par ce capteur de température, et à partir de l'écart entre la valeur nominale de température et la valeur réelle de température est détectée une variation de la qualité d'isolation thermique du récipient quand l'écart se trouve au-delà d'une valeur seuil.

14. Procédé selon la revendication 13, **caractérisé en ce que** le modèle de transfert thermique du récipient tient aussi compte de la conduction thermique découlant des caractéristiques constructives et matérielles du récipient.

15. Procédé selon une des revendications 13 ou 14, **caractérisé en ce que** la variation détectée de la qualité d'isolation thermique du récipient est classifiée comme une hausse de pression dans l'enceinte sous vide (5) quand l'écart entre la valeur réelle de température et la valeur nominale de température est inférieur à la valeur nominale de température de la valeur limite ou plus.

16. Procédé selon une des revendications 13 à 15, **caractérisé en ce que** la variation détectée de la qualité d'isolation thermique du récipient est classifiée comme un endommagement de la paroi extérieure (1) quand l'écart entre la valeur réelle de température et la valeur nominale de température est supérieur à la valeur nominale de température de la valeur limite ou plus.

17. Procédé selon une des revendications 13 à 16, **caractérisé en ce qu'**à partir de la différence entre la valeur nominale de température et la valeur réelle de température est déterminée la dépression dans l'enceinte sous vide (5), sur la base de mesures de température précédentes à différentes dépressions connues dans l'enceinte sous vide (5).

18. Procédé selon une des revendications 13 à 17, **caractérisé en ce qu'**un capteur de pression (19) pouvant être disposé sur la paroi intérieure (3) est prévu dans la cuve intérieure et qu'à partir des signaux de pression, la température dans la cuve intérieure est déterminée à l'aide de la dépendance vis-à-vis de la pression de la température d'ébullition à laquelle le gaz liquéfié est emmagasiné dans la cuve intérieure.

19. Procédé selon la revendication 18, **caractérisé en ce que** la variation de la pression mesurée par le capteur de pression (19) dans la cuve intérieure est classifiée comme une opération de remplissage temporaire de la cuve quand le taux de variation dépasse une valeur limite.

20. Procédé selon une des revendications 13 à 19, **caractérisé en ce que** dans la cuve intérieure est agencé un capteur de niveau (17), la variation du niveau (16) du gaz liquéfié emmagasiné (7) étant classifiée comme une opération de remplissage temporaire de la cuve quand le taux de variation dépasse une valeur limite.

21. Procédé selon une des revendications précédentes, **caractérisé en ce que** la courbe de température est approchée par juxtaposition de segments de droite, lesquels segments de droite relient des valeurs de température voisines entre elles enregistrées par les capteurs de température, à partir d'un angle ($\alpha$) au niveau d'un point de connexion entre deux segments de droite voisins entre eux étant déduit l'écart de la valeur réelle de température au niveau de ce point de connexion par rapport à la valeur nominale de température.

22. Procédé selon la revendication 21, **caractérisé en ce que** la cause est classifiée à partir d'un taux de variation de l'angle a qui est proportionnel au taux de variation de la valeur réelle de température au niveau de ce point de connexion.

Fig. 1

Fig. 2

Fig. 3

Fig. 4

Fig. 5

Fig. 6

Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 2006078190 A
- EP 3012510 A1
- DE 102005014479 A1

- WO 2016128696 A1
- JP H04169777 A